# FASCICULE DE BREVET EUROPEEN

(11) **EP 2 795 375 B1**
(45) Date de publication et mention de la délivrance du brevet: **11.07.2018**
(21) Numéro de dépôt: 12816725.1
(22) Date de dépôt: 13.12.2012
(51) Int. Cl.: G01V 9/02

(54) **PROCÉDÉ ET APPAREIL DE DÉTERMINATION D'UNE TRAJECTOIRE D'UN ÉCOULEMENT AQUEUX, ET SONDE AUTONOME MISE EN OEUVRE DANS CE PROCÉDÉ**
VERFAHREN UND VORRICHTUNG ZUR BESTIMMUNG EINER TRAJEKTORIE EINER WÄSSERIGEN STRÖMUNG UND AUTONOME SONDE IN DIESEM VERFAHREN
METHOD AND DEVICE FOR DETERMINING A TRAJECTORY OF AN AQUEOUS FLOW, AND AUTONOMOUS PROBE IMPLEMENTED IN SAID METHOD

(30) Priorité: 20.12.2011 FR 1161985
(43) Date de publication de la demande: 29.10.2014
(73) Titulaire: Université Montpellier 2 Sciences et Techniques, 34090 Montpellier (FR); Centre National de la Recherche Scientifique, 75016 Paris (FR)
(72) Inventeur: PISTRE, Séverin, 34980 Saint Gély Du Fesc (FR); FALGAYRETTES, Pascal, 34000 Montpellier (FR); HAKOUN, Vivien, 34090 Montpellier (FR)
(74) Mandataire: Pontet Allano & Associes
(86) Numéro de dépôt international: PCT/FR2012/052918
(87) Numéro de publication internationale: WO 2013/093303

(56) Documents cités:
- WO-A2-2009/047781
- WO-A2-2010/105177
- JP-A- 2005 131 012
- US-A- 5 825 188
- US-A1- 2006 047 428
- US-A1- 2009 105 969
- US-A1- 2009 254 003

## Description

L'invention concerne un procédé et appareil pour déterminer une trajectoire d'un écoulement aqueux, notamment pour cartographier un milieu complexe et peu ou pas accessible tel qu'un aquifère karstique. L'écoulement aqueux peut également être constitué par une conduite souterraine, mine, des canaux divers ou encore rivière. Elle vise également une sonde autonome mise en oeuvre dans ce procédé.

### Etat de la technique antérieur

Un aquifère est un ensemble rocheux, suffisamment poreux et perméable pour contenir et laisser circuler une nappe d'eau souterraine. Une nappe d'eau souterraine est une réserve naturelle d'eau douce susceptible d'être exploitée.

On distingue les aquifères poreux des aquifères fissurés et karstifiés.

Dans les aquifères poreux, l'eau est contenue dans les pores ouverts de la roche et peut y circuler (sables, craie, graviers, grès, scories volcaniques, etc.). La perméabilité y est matricielle et fonction de la dimension des pores.

Dans les aquifères fissurés, l'eau est contenue et circule dans les failles, fissures ou diaclases de la roche (calcaires, granites, basaltes, etc.). La perméabilité y est principalement fissurale et fonction de la taille et de la connexion des fissures ou failles.

Les aquifères karstiques sont à l'origine des aquifères fissurés dans lesquels l'eau circulant dans les fissures a progressivement dissout la roche. Cette dissolution aboutit à la création de cavités et de drains organisés, de tailles variables dans lesquels l'eau peut circuler très rapidement comparativement aux aquifères poreux ou même fissurés. La gestion de ces aquifères (captage d'eau potable, transport de pollutions, ...) reste à ce jour délicate en raison de la méconnaissance quasi totale du réseau de drains. Tout procédé permettant de cartographier même partiellement ce réseau noyé permettrait d'améliorer considérablement leur gestion.

Les importantes profondeurs atteintes par les réseaux de conduits, ne permettent pas d'utiliser de système de cartographie tels que les systèmes GPS.

On connaît des procédés permettant de retrouver en partie la ou les sorties d'un aquifère karstique à partir notamment du versement de colorants en amont.

Ces procédés sont largement utilisés mais n'apportent pas d'autre information que le ou les points de sortie en aval du point de versement amont auxquels on associe un ou des temps de transit. De tels procédés permettent d'établir d'éventuelles liaisons hydrauliques mais ne permettent pas de cartographier le parcours de l'écoulement.

On connaît des dispositifs tels que des robots capables de se déplacer au sein de drains karstiques et permettant de cartographier ce dernier.

Cependant, ces dispositifs sont coûteux et se retrouvent souvent coincés lorsqu'ils redescendent le courant pour livrer la cartographie enregistrée.

Par ailleurs, ces dispositifs ont une autonomie limitée par la batterie qu'ils embarquent.

De plus, ces dispositifs peuvent polluer la ressource en eau en restant piégés dans le réseau. Il faut noter que cette eau peut-être captée pour l'alimentation en eau potable.

En outre, ces robots ne sont pas de taille restreinte, ce qui ne permet pas d'envisager leur passage dans des sections étroites du réseau.

Enfin, ces robots sont des systèmes actifs utilisant des moteurs pour se déplacer, ce qui augmente encore leur dépense en énergie.

On connaît enfin la publication US 2010/0274488 qui divulgue un dispositif et procédé pour cartographier un réseau souterrain complexe et peu accessible. Ce dispositif divulgue l'utilisation de capteur ultrasons dont la fonction est de cartographier en trois dimensions le milieu. Les mesures obtenues par les capteurs ultrasons permettent d'effectuer une triangulation du milieu. Cette triangulation peut être affectée par des mouvements soudains du dispositif lors des mesures par capteur ultrasons. Il est ainsi divulgué un accéléromètre pour pouvoir mesurer de tels mouvements soudains et pour pouvoir en tenir compte lors de l'utilisation des mesures obtenues par les capteurs ultrasons.

Ce document divulgue également l'utilisation d'un magnétomètre pour permettre au dispositif de déterminer le nord magnétique.

Cependant, la multiplicité des capteurs réduit d'autant la durée de fonctionnement de l'appareil en augmentant la consommation d'énergie provenant de la batterie.

De plus, cette multiplicité conduit à un coût élevé du dispositif et à un encombrement important.

Enfin, ce dispositif utilise une pile comme ressource en énergie. Cette pile est a priori polluante pour l'environnement dans le cas où le dispositif reste coincé dans le réseau souterrain.

Un but de l'invention est de remédier à au moins l'un de ces inconvénients.

Un autre but de l'invention est de proposer un dispositif et un procédé pour cartographier des écoulements aqueux.

Un autre but de l'invention est de proposer un tel dispositif et procédé qui soit moins coûteux que les dispositifs connus.

Un autre but de l'invention est de proposer un tel dispositif et procédé pour permettre le passage du dispositif dans des sections de réseau plus étroites que celles dans lesquelles les dispositifs selon l'état de l'art peuvent passer.

Un autre but de l'invention est de proposer un dispositif pouvant être inséré dans le milieu aquifère en utilisant un forage.

Un autre but de l'invention est de proposer un tel dispositif et procédé qui soit passif, c'est à dire qui ne nécessite pas l'utilisation de moteur pour son déplacement.

Un autre but de l'invention est de proposer un tel dispositif et procédé dont l'autonomie est très importante.

Un autre but de l'invention est de proposer un dispositif et un procédé non-polluant pour l'exploitation en eau potable, de l'aquifère lorsque le dispositif reste coincé.

### Exposé de l'invention

On atteint au moins l'un des objectifs précités avec un procédé de détermination d'une trajectoire d'un écoulement aqueux selon la revendication 1. Il est ainsi proposé un procédé permettant de développer un dispositif pour cartographier des écoulements aqueux. Une trajectoire de ce milieu étant directement déterminée à partir de données d'accélération recueillies par le dispositif, celui-ci est d'une taille plus réduite que ceux proposées dans l'état de la technique et moins coûteux que ceux-ci. Il est ainsi possible de l'insérer dans un milieu aqueux en utilisant un forage et peut passer dans des sections de réseau plus étroites que celles dans lesquels les dispositifs de l'art antérieur peuvent passer.

De plus, l'étape de traitement des données mises en mémoire peut en outre comprendre :
- une étape d'élimination d'un biais sur les données mises en mémoire pour produire des données filtrées,
- une étape de projection des données filtrées dans le référentiel terrestre.

Des biais peuvent être enregistrés dans les mesures. Ces biais sont principalement dus à une fluctuation de l'alimentation de moyens pour mesurer une accélération ou à une variation d'une grandeur physique lors de l'étape de mesure de données d'accélération. Ces biais introduisent alors une dérive lente des données mesurées et l'élimination de ceux-ci peut alors être réalisée par un traitement fréquentiel du signal éliminant ces très basses fréquences.

L'étape de projection des données filtrées dans le référentiel terrestre peut être réalisée en faisant une hypothèse sur la vitesse de rotation du dispositif dans le milieu aqueux et en déterminant l'orientation de la sonde par un traitement des données d'accélération.

L'étape de mesure peut comprendre en outre une mesure de l'orientation magnétique du dispositif, une mise en mémoire de données d'orientation magnétique et un traitement des données d'orientation magnétique mises en mémoire lors la projection des données filtrées dans le référentiel terrestre.

Il est ainsi possible de déterminer les angles de rotation du dispositif par rapport au nord magnétique terrestre sans faire d'hypothèse sur l'orientation de la gravité terrestre. L'étape de projection des données filtrées dans le référentiel terrestre se trouve ainsi simplifiée.

Le procédé selon l'invention peut comprendre en outre une étape de détermination de l'orientation du référentiel du dispositif mobile dans le référentiel terrestre, en utilisant :
- une détermination de la composante vectorielle de la pesanteur terrestre dans le référentiel dudit dispositif mobile obtenue à partir de données d'accélération, et
- une mesure de l'orientation magnétique dudit dispositif mobile dans le champ magnétique terrestre.

Il peut comprendre en outre une étape de correction de la trajectoire déterminée par double intégration des données traitées, laquelle comprenant :
- une détermination d'une erreur globale sur ladite trajectoire, en comparant la localisation géographique d'un point d'arrivé du dispositif mobile avec la localisation dudit point d'arrivé obtenue à partir de ladite trajectoire, et
- une correction de ladite erreur globale en appliquant à ladite trajectoire une rotation autour d'un point de départ du dispositif mobile et une homothétie.

Les points de départ et d'arrivée correspondent respectivement à la localisation géographique ou topologique du début et de la fin de la trajectoire de l'écoulement aqueux.

L'étape de mesure peut en outre comprendre une mesure d'angles de rotation dudit dispositif, une mise en mémoire de données de mesure d'angles de rotation et un traitement des données d'angles de rotation mises en mémoire lors de la projection des données filtrées dans le référentiel terrestre.

Cette mesure d'angles de rotation du dispositif peut être réalisée par un gyroscope compris dans le dispositif et il n'est alors plus nécessaire de faire d'hypothèse sur l'orientation de la gravité terrestre. L'étape de projection des données filtrées dans le référentiel terrestre se trouve ainsi simplifiée.

Avantageusement, le procédé selon l'invention peut en outre comprendre une étape de production d'énergie pour le dispositif provenant d'une pile de corrosion à eau.

Ainsi, le dispositif peut être allégé et moins volumineux puisqu'il peut ne pas comprendre de batterie. Ceci lui permet de pouvoir passer dans des écoulements aqueux plus étroits que les dispositifs connus. Par ailleurs, sa durée de vie est quasi-infinie et il est ainsi moins coûteux que les dispositifs connus. Enfin, il est moins polluant que les dispositifs connus lorsqu'il reste coincé dans un écoulement aqueux si le couple métallique choisi est acceptable pour l'écoulement/milieu étudié.

Selon un autre aspect de l'invention, il est proposé un système pour déterminer une trajectoire d'un écoulement aqueux selon la revendication 8. Le système selon l'invention peut comprendre en outre :
- des moyens pour mesurer l'orientation magnétique du dispositif
   mobile, et
- des moyens pour traiter des données d'orientation magnétique fournies par lesdits moyens pour mesurer l'orientation magnétique (208).
Le système comprend en outre une sonde autonome pour déterminer une trajectoire d'un écoulement aqueux comprenant :
- des moyens pour mesurer des accélérations de la sonde dans les trois dimensions de l'espace,
- des moyens de mémoire pour enregistrer les mesures d'accélération.

Les moyens pour mesurer des accélérations peuvent être aptes à produire une mesure d'accélération dans une gamme fréquentielle à partir du continu, et une mesure d'accélération filtrée passe-haut dans laquelle la composante continue est éliminée.

De plus, une sonde autonome peut en outre comprendre des moyens pour mesurer et enregistrer l'orientation magnétique de ladite sonde.

Avantageusement, une sonde autonome peut en outre comprendre des moyens pour mesurer et enregistrer des angles de rotation du dispositif.

En particulier, une sonde autonome peut en outre comprendre des moyens d'alimentation comprenant deux électrodes métalliques et un électrolyte contenant du liquide provenant dudit milieu aqueux. Il est proposé un appareil électronique pour déterminer une trajectoire d'un écoulement aqueux, mis en oeuvre dans un système selon l'invention, cet appareil comprenant :
- des moyens d'acquisition de données enregistrées par une sonde autonome selon l'invention, et
- des moyens de traitement des données acquises, pour déterminer ladite trajectoire par double intégration des données traitées.

De plus, les moyens de traitement des données peuvent en outre comprendre :
- des moyens de filtrage de données pour éliminer un biais des données acquises, et
- des moyens de projection desdites données filtrées dans le référentiel terrestre.

Ainsi, l'invention propose une solution efficace et simple à mettre en oeuvre pour effectuer une cartographie de réseaux de type aquifères karstiques.

L'invention peut en outre être mise en oeuvre pour tous types d'applications similaires. Elle peut ainsi être utilisée par exemple pour :
- effectuer une cartographie ou une caractérisation du transport de particules au sein d'un écoulement dans un fluide en milieu souterrain et/ou dans un environnement inaccessible ou confiné ;
- contrôler l'écoulement d'un effluent dans un réseau souterrain tel qu'un réseau d'eaux usées ou pluviales, et, par exemple, identifier des zones « d'eaux mortes » (dans lesquelles les vitesses sont nulles pour une série de mesures données) et des zones « de recirculation » (dans lesquelles la trajectoire indique des boucles locales) au cours du parcours.

La sonde selon l'invention peut en outre comprendre des capteurs additionnels, tels que par exemple des capteurs de température et/ou de conductivité électrique, qui permettent d'obtenir des informations sur des paramètres physico-chimiques du milieu environnant.

Ces informations peuvent par exemple être utilisées pour identifier des apports de fluides spécifiques locaux (par exemple une arrivée d'eau) à la confluence de deux drains transportant des eaux aux caractéristiques physico-chimiques différentes. On peut ainsi obtenir une cartographie dans l'espace de ces zones de confluence.

### Description

D'autres avantages et particularités de l'invention apparaîtront à la lecture de la description détaillée de mises en oeuvre et d'un mode de réalisation nullement limitatif, et des dessins annexés suivants :
- la figure 1 est une représentation schématique d'un procédé selon l'invention,
- la figure 2 est une vue schématique d'un système selon l'invention ; et
- la figure 3 est une vue schématique d'une sonde selon l'invention.

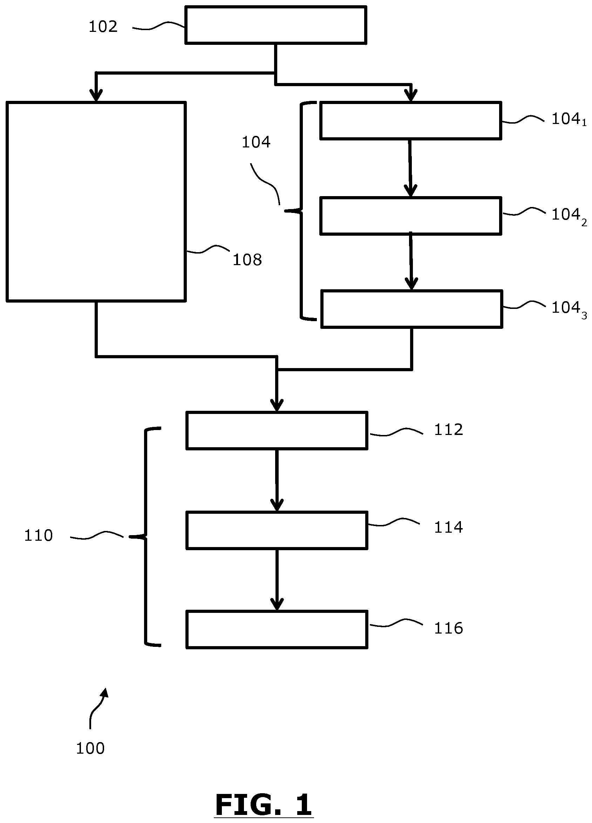

La figure 1 illustre un mode de réalisation d'un procédé 100 de détermination d'une trajectoire d'un écoulement aqueux selon l'invention.

Le procédé 100 comprend :
- une étape 102 d'introduction d'un dispositif mobile autonome de mesure dans l'écoulement aqueux, puis
- une étape 104 de mesure de données et de mise en mémoire de données,
- une étape 108 de génération d'énergie pour le dispositif,
- une étape (non représentée) de récupération du dispositif mobile autonome de mesure dans l'écoulement aqueux,
- une étape 110 de traitement de données recueillies durant l'étape de mesure 104 et de détermination de la trajectoire par double intégration des données traitées.

L'étape 104 de mesure de données et de mise en mémoire des données comprend en outre :
- une étape 104₁ de mesure de données à intervalle de temps réguliers. L'intervalle de temps est réglable,
- une étape 104₂ de conversion de ces mesures sur n bits par un convertisseur analogique/numérique d'un microcontrôleur intégré dans le dispositif, et
- une étape 104₃ d'enregistrement de ces données dans une carte mémoire intégrée dans le dispositif.

Les données mesurées sont les accélérations subies par le dispositif dans un référentiel du dispositif mobile.

D'autres données sont mesurées et mises en mémoire, telles que la conductivité de l'eau, sa température ainsi que l'enregistrement de la direction du nord magnétique en utilisant un compas magnétique.

L'étape 108 de génération d'énergie pour le dispositif consiste à utiliser l'énergie issue de la corrosion d'un métal, ou d'un couple de métaux, en milieu aqueux pour former une pile de corrosion. La corrosion résulte de l'existence simultanée de deux réactions électrochimiques : la réaction située à l'anode qui correspond à l'oxydation du métal - qui produit en général un oxyde qui passe en solution dans l'eau - et la réaction à la cathode qui correspond à la réduction de l'oxydant.

Cette génération d'énergie consiste en l'utilisation de l'eau du milieu aqueux comme électrolyte. Ceci permet d'éviter la saturation de l'électrolyte d'une batterie classique, du fait du renouvellement de celui-ci dans le milieu aqueux. De plus, le dispositif a alors un poids moindre du fait qu'il n'emporte pas d'électrolyte. Le changement de masse de la sonde lors de la consommation de la ressource énergique que constitue le métal conduit à une augmentation de la poussée d'Archimède et par conséquent au risque de flottaison du dispositif.

Le potentiel disponible aux bornes d'une telle pile de corrosion est faible. Il est ainsi proposé une étape (non représentée) d'élévation par un circuit de type pompe de charge. De plus une capacité est chargée progressivement par ce circuit à pompe de charge afin de réguler la tension mais aussi de pourvoir au pic de courant plus important au moment de l'écriture des données mesurée lors de l'étape 104₃.

L'étape 110 de traitement de données recueillies durant l'étape de mesure 104 et de détermination de la trajectoire par double intégration des données traitées comprend :
- une étape 112 d'acquisition des données recueillies par la sonde autonome,
- une étape 114 d'élimination d'un biais des données acquises pour produire des données filtrées, et
- une étape 116 de projection des données filtrées dans le référentiel terrestre.

Lors de l'étape 114, un premier biais lié au capteur de mesure d'accélération qui possède une légère dérive est corrigé. Cette dérive peut avoir pour origine l'alimentation du capteur qui fluctue légèrement pendant la durée d'enregistrement. Cette dérive peut également avoir pour origine une grandeur physique, telle que par exemple la variation de température. Dans ces deux cas, la dérive est lente et la correction est effectuée par traitement fréquentiel en éliminant les très basses fréquences.

Lors de l'étape 116, il est tenu compte de la trajectoire propre du capteur. En effet, les données sont enregistrées dans le référentiel de la sonde et celle-ci subit des rotations aléatoires dues à l'effet des courants. En traitant les données provenant de l'utilisation d'un compas magnétique, les angles de rotation de la sonde sont déterminés. Les données enregistrées dans le référentiel de la sonde sont alors projetées dans le référentiel terrestre.

Enfin, l'étape 116 s'achève par le calcul d'une double intégration de l'accélération dans le référentiel terrestre afin de calculer la vitesse, puis la position de chaque point de mesure.

Dans une variante du mode de réalisation du procédé, les angles de rotation de la sonde sont déterminés directement par le traitement de données relevées par un gyroscope intégré dans la sonde.

Dans une autre variante du mode de réalisation du procédé, l'orientation de la sonde est déterminée par traitement des données d'accélération. La direction de la pesanteur terrestre est alors considérée comme constante.

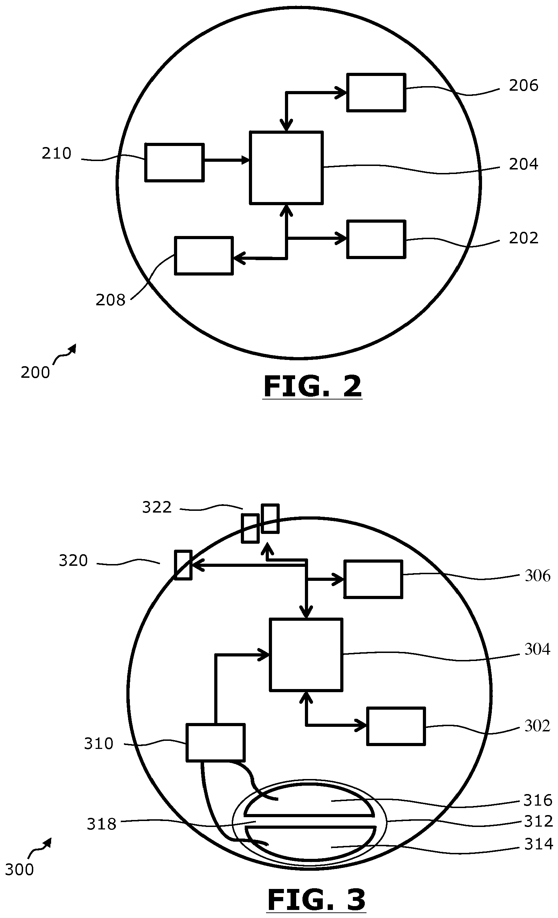

La figure 2 représente une sonde 200 pour déterminer une trajectoire d'un écoulement aqueux.

La sonde 200 comprend un accéléromètre trois dimensions 202 pour mesurer des accélérations dans les trois dimensions de l'espace.

La sonde 200 comprend en outre un microcontrôleur 204 en liaison bidirectionnelle avec l'accéléromètre 202.

La sonde 200 comprend en outre une carte SD 206. Cette carte est en liaison bidirectionnelle avec le microcontrôleur 204. Les données mesurées par l'accéléromètre 202 sont enregistrées dans la mémoire SD 206.

La sonde 200 comprend en outre un compas magnétique 208 à trois directions pour mesurer et enregistrer l'orientation magnétique de la sonde 200.

Elle comprend en outre une unité d'alimentation 210. Cette unité d'alimentation est reliée à une pile classique ou de corrosion (non représentée) et alimente les circuits électroniques via le microcontrôleur 204.

En l'absence de ballast notamment, le compas magnétique 208 permet d'enregistrer les rotations de la sonde 200 par rapport au référentiel de la sonde (ou en d'autres termes les rotations du champ magnétique terrestre dans le référentiel de la sonde) et ainsi de pouvoir projeter les données d'accélération recueillies dans le référentiel terrestre.

La figure 2 étant une vue de principe d'un premier mode de réalisation d'une sonde selon l'invention, les fonctionnalités de mesure d'accélération et de compas magnétique ont été séparées. En réalité, ces fonctionnalités sont implémentées au sein d'un même capteur MEMS (Microsystème Électromécanique) de type qui est apte à mesurer l'accélération et l'orientation magnétique de la sonde. Ces fonctionnalités étant intégrées dans un même capteur, le référentiel de mesure est alors le même pour les deux types de mesure.

La figure 3 représente une sonde autonome 300 pour déterminer une trajectoire d'un écoulement aqueux.

La sonde autonome 300 comprend un accéléromètre trois dimensions 302 pour mesurer des accélérations dans les trois dimensions de l'espace.

La sonde 300 comprend en outre un microcontrôleur 304 en liaison bidirectionnelle avec l'accéléromètre 302.

La sonde 300 comprend en outre une carte SD 306. Cette carte est en liaison bidirectionnelle avec le microcontrôleur 304. Les données mesurées par l'accéléromètre 302 sont enregistrées dans la mémoire SD 306.

Elle comprend en outre une unité d'alimentation 310. L'unité d'alimentation 310 fournit de l'énergie au reste du circuit via l'alimentation du microcontrôleur 304. Cette unité d'alimentation est reliée à une pile de corrosion modifiée 312 et alimente les circuits électroniques via le microcontrôleur 304.

La pile de corrosion 312 comprend deux électrodes 314 et 316. L'électrolyte 318 est constitué par du liquide provenant du milieu aqueux dans lequel la sonde autonome 300 est introduite. L'électrode 316 est constituée de magnésium et joue le rôle d'anode. L'électrode 314 est constituée de cuivre et joue le rôle de cathode. Dans ce cas, le magnésium étant le métal le plus réducteur, il est oxydé par l'électrolyte 318 et libère des électrons.

Le changement de masse de la sonde, lors de la consommation de la ressource énergique que constitue le métal, conduit à une augmentation de la poussée d'Archimède et par conséquent au risque de flottaison du dispositif. Pour contrer cet effet, la pile de corrosion 312 est conçue pour laisser entrer et sortir l'électrolyte provenant du milieu aqueux. Ainsi, lorsque la quantité de magnésium diminue, le volume d'électrolyte provenant du milieu aqueux à l'intérieur de la pile de corrosion augmente, et diminue ainsi la poussée d'Archimède résultant de la consommation de la ressource énergétique.

Ainsi conçue, la pile de corrosion a également pour fonction de jouer le rôle de ballast pour la sonde 300. Le ballast a pour fonction de corriger la gîte ou l'assiette, et améliorer la stabilité de la sonde en modifiant la position du centre de gravité de celle-ci.

La sonde 300 comprend en outre un capteur de température 320 et des cellules de mesure de la conductivité 322. Les capteurs de température 320 et les cellules de mesure de conductivité 322 sont indépendamment reliés au microcontrôleur 304. Les données relatives à la température et à la conductivité sont enregistrées dans la carte SD 306.

Dans un autre mode de réalisation, la sonde peut comprendre également un compas magnétique à trois directions pour mesurer et enregistrer l'orientation magnétique de la sonde. Ce compas magnétique peut par exemple être inclus dans la sonde 300 présentée à la figure 3.

En l'absence de ballast notamment, le compas magnétique permet d'enregistrer les rotations de la sonde dans le référentiel de la sonde (ou en d'autres termes les rotations du champ magnétique terrestre dans le référentiel de la sonde) et ainsi de pouvoir projeter les données d'accélération recueillies dans le référentiel terrestre.

Il est également possible d'utiliser des données enregistrées dans un gyroscope.

On va maintenant décrire plus précisément un mode de réalisation et de mise en oeuvre de l'invention pour déterminer une trajectoire d'un écoulement aqueux.

Comme expliqué précédemment, l'invention est mise en oeuvre sous la forme d'un système qui comprend :
- une sonde autonome 200, qui est destinée à être insérée dans un écoulement à un point d'entrée et récupérée à un point de sortie ; et
- un appareil électronique avec des moyens de calcul pour traiter les données enregistrées par la sonde 200 durant son parcours dans l'écoulement. En pratique, cet appareil est un ordinateur avec un lecteur pour lire les données enregistrées sur la carte mémoire de la sonde 200.

La sonde 200 comprend un accéléromètre à 3 axes 202 qui permet d'effectuer des mesures de l'accélération en 3 dimensions (3D). Cet accéléromètre permet d'obtenir deux types de mesures :
- une mesure d'accélération « complète » **Y_{c}** qui comporte la composante de l'accélération de la pesanteur terrestre **g** à laquelle s'ajoute vectoriellement le vecteur-accélération lié au mouvement **Y,**
- une mesure d'accélération « filtrée » **Y_{f}** dans laquelle la composante continue, correspondant à la gravité, est éliminée par un filtrage numérique passe-haut à très basse fréquence (de l'ordre de 0,25Hz). Cette mesure d'accélération « filtrée » **Y_{f}** correspond au vecteur-accélération lié au mouvement **Y** (**Y_{f}** = **Y**).

La sonde 200 comprend en outre un compas magnétique 208 qui effectue des mesures de l'orientation du champ magnétique terrestre en trois dimensions, dans le référentiel de la sonde 200. Cette mesure est une mesure absolue.

Cet ensemble de mesures d'accélération et de champ magnétique permet notamment de s'affranchir des effets de l'inclinaison de la sonde 200 par rapport à sa position horizontale, qui peut survenir même si celle-ci est lestée (par exemple par les électrodes 314, 316 de la pile 312).

Dans un premier temps, la sonde 200 est insérée dans l'écoulement (étape 102 du procédé de mesure tel qu'illustré à la figure 1).

La sonde 200 mesure et enregistre alors alternativement tout au long de son parcours dans l'écoulement des mesures d'accélération « complètes » et « filtrées » (étape 104 du procédé de mesure tel qu'illustré à la figure 1).

Ensuite, la sonde 200 est récupérée et ses données sont analysées.

Lors de l'étape 110 de traitement des données, ou plus précisément lors de l'étape 116 de projection des données filtrées dans le référentiel terrestre, on effectue les opérations suivantes :
- on détermine la composante vectorielle de l'accélération de la pesanteur terrestre **g** en soustrayant le vecteur-accélération « filtré » **Y_{f}** du vecteur-accélération « complet » **Y_{c}**. Cela permet de déterminer pour chaque donnée mesurée la différence angulaire entre l'axe **Z'** du référentiel de la sonde et l'axe **Z** du référentiel terrestre (dont l'axe **Z** est dirigé vers le centre de la terre, et dont les axes **X** et **Y** sont dans le plan de l'horizontale locale au lieu de mesure) ;
- en complément, on utilise l'orientation du champ magnétique terrestre donné par le compas magnétique 208 pour orienter les axes **X'** et **Y'** du référentiel de la sonde par rapport par rapport au nord magnétique, et donc aux axes **X** et **Y** du référentiel terrestre. On obtient ainsi l'orientation complète de la sonde dans le référentiel fixe terrestre à tout instant au cours de son parcours. Cette orientation peut être définie par exemple par les angles de cap (« heading » en Anglais), tangage (« pitch » en Anglais) et roulis (« roll » en Anglais), entre les axes respectifs du référentiel terrestre (**X**, **Y**, **Z**) et du référentiel de la sonde (**X'**, **Y'**, **Z'**);
- on intègre ensuite le vecteur-accélération « filtré » **Y_{f},** de telle sorte à déterminer la vitesse instantanée de la sonde 200 en chaque point de l'écoulement, dans le référentiel de la sonde (**X'**, **Y'**, **Z'**) ;
- en utilisant les angles d'inclinaison précédemment calculés, on projette par une série de 3 rotations le vecteur-vitesse de la sonde dans le référentiel terrestre (**X**, **Y, Z**) ;
- enfin, on calcule la position de la sonde 200 par intégration des composantes du vecteur-vitesse sur les 3 axes du référentiel terrestre (**X**, **Y, Z).**

Lorsque la trajectoire est entièrement déterminée, une dernière correction est réalisée en effectuant la fusion des données topographiques (coordonnées cartographiques ou GPS) avec celles issues de la sonde 200.

Le point de départ de la sonde 200, ainsi que celui d'arrivée, sont connus et servent à calculer un facteur d'échelle pour la trajectoire mesurée par la sonde. Ce facteur d'échelle permet de corriger la dérive du capteur accélérométrique. Cette erreur due à la dérive est cumulative. Elle peut devenir importante car l'accélération est intégrée pour obtenir la vitesse.

Cette correction comprend les étapes suivantes :
- à l'aide des coordonnées topographiques, on détermine un segment de droite de référence correspondant à la trajectoire de l'écoulement. Ce segment de droite de référence relie le point de départ et le point d'arrivée de la sonde 200 en coordonnées topographiques. Il est défini par une longueur et une orientation ;
- on calcule ensuite un segment de droite de mesure qui relie le point de départ et le point d'arrivée de la trajectoire de la sonde précédemment calculée ;
- la différence, en longueur et en orientation, entre les segments de droite de référence et de mesure permet de calculer une correction à appliquer à l'ensemble des points de la trajectoire calculée pour pouvoir faire coïncider les points de départ et d'arrivée déterminés respectivement sur le plan et à partir de la trajectoire de la sonde. Cette correction peut par exemple comprendre une rotation autour du point de départ et une homothétie, avec un facteur d'échelle.

Bien sûr, l'invention n'est pas limitée aux exemples qui viennent d'être décrits et de nombreux aménagements peuvent être apportés à ces exemples sans sortir du cadre de l'invention lequel est uniquement limité par l'objet défini dans les revendications suivantes.

## Revendications

1. Procédé de détermination d'une trajectoire d'un écoulement aqueux, mettant en oeuvre un dispositif mobile autonome de mesure (200, 300) introduit dans ledit écoulement aqueux, comprenant:
- une étape de mesure (104) et de mise en mémoire de données d'accélération dans un référentiel dudit dispositif mobile (200), et
- une étape de détermination de ladite trajectoire en fonction d'un point de départ de ladite sonde et par traitement (110) de données recueillies durant ladite étape de mesure (104) et double intégration des données traitées.

2. Procédé selon la revendication 1, **caractérisé en ce que** l'étape de traitement (110) des données mises en mémoire comprend en outre :
- une étape d'élimination d'un biais (114) sur lesdites données mises en mémoire pour produire des données filtrées, et
- une étape de projection (116) desdites données filtrées dans le référentiel terrestre.

3. Procédé selon l'une quelconque des revendications 1 à 2, **caractérisé en ce que** l'étape de mesure (104) comprend en outre une mesure de l'orientation magnétique dudit dispositif, une mise en mémoire de données de mesure d'orientation magnétique et un traitement des données d'orientation magnétique mises en mémoire lors de la projection des données filtrées dans le référentiel terrestre.

4. Procédé selon la revendication 3, **caractérisé en ce qu'**il comprend en outre une étape de détermination de l'orientation du référentiel du dispositif mobile (200, 300) dans le référentiel terrestre, en utilisant :
- une détermination de la composante vectorielle de la pesanteur terrestre dans le référentiel dudit dispositif mobile obtenue à partir de données d'accélération, et
- une mesure de l'orientation magnétique dudit dispositif mobile dans le champ magnétique terrestre.

5. Procédé selon l'une des revendications précédentes, **caractérisé en ce qu'**il comprend en outre une étape de correction de la trajectoire déterminée par double intégration des données traitées, laquelle comprenant :
- une détermination d'une erreur globale sur ladite trajectoire, en comparant la localisation géographique d'un point d'arrivée du dispositif mobile (200, 300) avec la localisation dudit point d'arrivée obtenue à partir de ladite trajectoire, et
- une correction de ladite erreur globale en appliquant à ladite trajectoire une rotation autour d'un point de départ du dispositif mobile (200, 300) et une homothétie.

6. Procédé selon l'une quelconque des revendications 1 à 5, **caractérisé en ce que** l'étape de mesure (104) comprend en outre une mesure d'angles de rotation dudit dispositif, une mise en mémoire de données de mesure d'angles de rotation et un traitement des données d'angles de rotation mises en mémoire lors de la projection des données filtrées dans le référentiel terrestre.

7. Procédé selon la revendication 1 à 6, **caractérisé en ce qu'**il comprend en outre une étape de production d'énergie (108) pour le dispositif (200, 300) provenant d'une pile de corrosion (312) à eau.

8. Système pour déterminer une trajectoire d'un écoulement aqueux, adapté pour mettre en oeuvre le procédé selon l'une des revendications précédentes et comprenant :
- une sonde autonome (200, 300) prévue pour être introduite dans ledit écoulement aqueux et comprenant :
- des moyens pour mesurer des accélérations (202, 302) de ladite sonde (200, 300) dans les trois dimensions de l'espace, et
- des moyens de mémoire (206, 306) pour enregistrer lesdites mesures d'accélération ; et
- un appareil électronique pour déterminer une trajectoire d'un écoulement aqueux, comprenant :
- des moyens d'acquisition de données enregistrées par la sonde autonome (200, 300), et
- des moyens de traitement des données acquises, pour déterminer ladite trajectoire par double intégration des données traitées.

9. Système selon la revendication 8, **caractérisé en ce que** les moyens pour mesurer des accélérations (202, 302) sont aptes à produire une mesure d'accélération dans une gamme fréquentielle à partir du continu, et une mesure d'accélération filtrée passe-haut dans laquelle la composante continue est éliminée.

10. Système selon la revendication 8 ou 9, **caractérisé en ce que** la sonde autonome (200,300) comprend en outre des moyens pour mesurer et enregistrer l'orientation magnétique (208) de ladite sonde (200, 300).

11. Système selon l'une quelconque des revendications 8 à 10, **caractérisé en ce que** la sonde autonome (200,300) comprend en outre des moyens pour mesurer et enregistrer des angles de rotation de ladite sonde (200,300).

12. Système selon l'une quelconque des revendications 8 à 11, **caractérisé en ce que** la sonde autonome comprend en outre des moyens d'alimentation (312) comprenant deux électrodes métalliques (314, 316) et un électrolyte (318) contenant du liquide provenant dudit milieu aqueux.

13. Système selon l'une quelconque des revendications 8 à 12, **caractérisé en ce que** les moyens de traitement des données comprennent en outre :
- des moyens de filtrage de données pour éliminer un biais des données acquises, et
- des moyens de projection desdites données filtrées dans le référentiel terrestre.

## Patentansprüche

1. Verfahren zum Bestimmen eines Strömungspfads einer wässrigen Strömung unter Verwendung einer eigenständigen beweglichen Messvorrichtung (200, 300), die in die wässrige Strömung eingeführt wird, umfassend:
- einen Schritt des Messens (104) und des Abspeicherns von Beschleunigungsdaten in einem Bezugssystem der beweglichen Vorrichtung (200), und
- einen Schritt des Bestimmens des Strömungspfads in Abhängigkeit von einem Ausgangspunkt der Sonde und durch Verarbeiten (110) von Daten, die während des Messschritts (104) erhoben wurden, und zweifache Integration der verarbeiteten Daten.

2. Verfahren nach Anspruch 1, **dadurch gekennzeichnet, dass** der Schritt (110) des Verarbeitens der abgespeicherten Daten ferner umfasst:
- einen Schritt des Beseitigens einer Verzerrung (114) der abgespeicherten Daten, um gefilterte Daten zu erzeugen, und
- einen Schritt der Projektion (116) der gefilterten Daten in das terrestrische Bezugssystem.

3. Verfahren nach einem der Ansprüche 1 bis 2, **dadurch gekennzeichnet, dass** der Schritt des Messens (104) ferner ein Messen der magnetischen Ausrichtung der Vorrichtung, ein Abspeichern der Messdaten der magnetischen Ausrichtung und eine Verarbeitung der abgespeicherten Daten der magnetischen Ausrichtung bei der Projektion der gefilterten Daten in das terrestrische Bezugssystem umfasst.

4. Verfahren nach Anspruch 3, **dadurch gekennzeichnet, dass** es ferner einen Schritt des Bestimmens der Ausrichtung des Bezugssystems der beweglichen Vorrichtung (200, 300) in dem terrestrischen Bezugssystem umfasst, unter Anwendung von:
- einer Bestimmung der Vektorkomponente der terrestrischen Schwerkraft in dem Bezugssystem der beweglichen Vorrichtung, die ausgehend von Beschleunigungsdaten erhalten wird, und
- einer Messung der magnetischen Ausrichtung der beweglichen Vorrichtung in dem terrestrischen Magnetfeld.

5. Verfahren nach einem der vorangehenden Ansprüche, **dadurch gekennzeichnet, dass** es ferner einen Schritt der Korrektor des durch zweifache Integration der verarbeiteten Daten bestimmten Strömungspfads umfasst, umfassend:
- eine Bestimmung eines Gesamtfehlers über den Strömungspfad, indem die geographische Lokalisierung eines Endpunkts der beweglichen Vorrichtung (200, 300) mit der Lokalisierung des ausgehend von dem Strömungspfad erhaltenen Endpunkts verglichen wird, und
- eine Korrektur des Gesamtfehlers, indem bei dem Strömungspfad eine Drehung um einen Ausgangspunkt der beweglichen Vorrichtung (200, 300) und eine Skalierung angewendet werden.

6. Verfahren nach einem der Ansprüche 1 bis 5, **dadurch gekennzeichnet, dass** der Schritt des Messens (104) ferner eine Messung von Drehwinkeln der Vorrichtung, ein Abspeichern von Drehwinkelmessdaten und ein Verarbeiten von abgespeicherten Drehwinkeldaten bei der Projektion der gefilterten Daten in das terrestrische Bezugssystem umfasst.

7. Verfahren nach Anspruch 1 bis 6, **dadurch gekennzeichnet, dass** es ferner einen Schritt der Energieerzeugung (108) für die Vorrichtung (200, 300) umfasst, die aus einer wasserbetriebenen Korrosionsbatterie (312) stammt.

8. System zum Bestimmen eines Strömungspfads einer wässrigen Strömung, das dazu ausgebildet ist, das Verfahren nach einem der vorangehenden Ansprüche durchzuführen und enthält:
- eine eigenständige Sonde (200, 300), die dazu vorgesehen ist, in die wässrige Strömung eingeführt zu werden und enthält:
- Einrichtungen zum Messen der Beschleunigungen (202, 302) der Sonde (200, 300) in den drei Raumdimensionen, und
- Speichereinrichtungen (206, 306) zum Aufzeichnen der Beschleunigungsmessungen; und
- ein elektronisches Gerät zum Bestimmen eines Strömungspfads einer wässrigen Strömung, enthaltend:
- Einrichtungen zum Erfassen von von der eigenständigen Sonde (200, 300) aufgezeichneten Daten, und
- Einrichtungen zum Verarbeiten der erfassten Daten, um deren Strömungspfad durch zweifache Integration der verarbeiteten Daten zu bestimmen.

9. System nach Anspruch 8, **dadurch gekennzeichnet, dass** die Einrichtungen zum Messen der Beschleunigungen (202, 302) dazu geeignet sind, eine Beschleunigungsmessung in einem Frequenzbereich ausgehend von Gleichstrom und eine hochpassgefilterte Beschleunigungsmessung, in welcher die Gleichstromkomponente beseitigt ist, durchzuführen.

10. System nach Anspruch 8 oder 9, **dadurch gekennzeichnet, dass** die eigenständige Sonde (200, 300) ferner Einrichtungen zum Messen und Aufzeichnen der magnetischen Ausrichtung (208) der Sonde (200, 300) enthält.

11. System nach einem der Ansprüche 8 bis 10, **dadurch gekennzeichnet, dass** die eigenständige Sonde (200, 300) ferner Einrichtungen zum Messen und Aufzeichnen der Drehwinkel der Sonde (200, 300) enthält.

12. System nach einem der Ansprüche 8 bis 11, **dadurch gekennzeichnet, dass** die eigenständige Sonde ferner Versorgungseinrichtungen (312) mit zwei Metallelektroden (314, 316) und einem Elektrolyten (318) enthält, der von dem wässrigen Medium stammende Flüssigkeit enthält.

13. System nach einem der Ansprüche 8 bis 12, **dadurch gekennzeichnet, dass** die Einrichtungen zum Verarbeiten der Daten ferner enthalten:
- Einrichtungen zum Filtern der Daten, um eine Verzerrung der erfassten Daten zu beseitigen, und
- Einrichtungen zur Projektion der gefilterten Daten in das terrestrische Bezugssystem.

## Claims

1. Method for determining a trajectory of an aqueous flow, utilizing an autonomous mobile measurement device (200, 300) introduced into said aqueous flow, comprising:
- a step of measuring (104) and storing acceleration data in a reference system of said mobile device (200), and
- a step of determining said trajectory based on a departure point of said mobile device (200) and by processing (110) data collected during said measuring step (104) and by double integration of the processed data.

2. Method according to claim 1, **characterized in that** the step of processing (110) the stored data also comprises:
- a step of eliminating a bias (114) from said stored data in order to produce filtered data, and
- a step of projecting (116) said filtered data onto the terrestrial reference system.

3. Method according to any one of claims 1 to 2, **characterized in that** the measurement step (104) also comprises a measurement of the magnetic orientation of said device, storing magnetic orientation measurement data and processing the stored magnetic orientation data at the time of projection of the filtered data onto the terrestrial reference system.

4. Method according to claim 3, **characterized in that** it also comprises a step of determining the orientation of the reference system of the mobile device (200, 300) in the terrestrial reference system, using:
- a determination of the gravity vector component in the reference system of said mobile device obtained from acceleration data, and
- a measurement of the magnetic orientation of said mobile device in the terrestrial magnetic field.

5. Method according to one of the previous claims, **characterized in that** it also comprises a step of correction of the trajectory determined by double integration of the data processed, comprising:
- determining an aggregate error over said trajectory, by comparing the geographical location of a point of arrival of the mobile device (200, 300) with the location of said arrival point obtained from said trajectory, and
- correcting said global error by applying to said trajectory a rotation around a departure point of the mobile device (200, 300) and a homothetic transformation.

6. Method according to any one of claims 1 to 5, **characterized in that** the measurement step (104) also comprises measuring rotation angles of said device, storing rotation angle measurement data and processing the stored rotation angle data at the time of projection of the filtered data onto the terrestrial reference system.

7. Method according to claims 1 to 6, **characterized in** this that it also comprises a step of producing energy (108) for the device (200, 300), originating from a water corrosion cell (312).

8. System for determining a trajectory of a aqueous flow, adapted to implement the method according to one of the previous claims, comprising:
- an autonomous probe (200, 300) arranged to be introduced in said aqueous flow comprising:
- means for measuring accelerations (202, 302) of said probe (200, 300) in the three spatial dimensions, and
- storage means (206, 306) for recording said acceleration measurements; and
- an electronic device for determining a trajectory of an aqueous flow, comprising:
- means for acquiring the data recorded by said autonomous probe (200, 300), and
- means for processing the acquired data, in order to determine said trajectory by double integration of the processed data.

9. System according to claim 8, **characterized in that** the means for measuring accelerations (202, 302) are capable of producing an acceleration measurement in a frequency range starting from continuous, and a high-pass filtered acceleration measurement in which the continuous component is eliminated.

10. System according to claim 8 or 9, **characterized in that** the autonomous probe (200,300) also comprises means for measuring and recording the magnetic orientation (208) of said probe (200, 300).

11. System according to any one of claims 8 to 10, **characterized in that** the autonomous probe (200,300) also comprises means for measuring and recording rotation angles of the device.

12. System according to any one of claims 8 to 11, **characterized in that** the autonomous probe (200,300) also comprises power supply means (312) comprising two metal electrodes (314, 316) and an electrolyte (318) containing liquid originating from said aqueous environment.

13. System according to any one of claims 8 to 12, **characterized in that** the data processing means also comprise:
- data filtering means for eliminating a bias from the acquired data, and
- means for projecting said filtered data onto the terrestrial reference system.
